# FASCICULE DE BREVET EUROPEEN

(11) **EP 2 362 742 B1**
(45) Date de publication et mention de la délivrance du brevet: **26.09.2012**
(21) Numéro de dépôt: 09760214.8
(22) Date de dépôt: 26.10.2009
(51) Int. Cl.: A47J 31/42, A47J 31/36

(54) **MACHINE À CAFÉ**
KAFFEEMASCHINE
COFFEE MACHINE

(30) Priorité: 28.10.2008 FR 0857344
(43) Date de publication de la demande: 07.09.2011
(73) Titulaire: Seb S.A., 69130 Ecully (FR)
(72) Inventeur: MORIN Gilles, F-21490 Varois et Chaignol (FR)
(74) Mandataire: Novagraaf Technologies
(86) Numéro de dépôt international: PCT/FR2009/052053
(87) Numéro de publication internationale: WO 2010/049631

(56) Documents cités:
- EP-A- 0 608 804
- WO-A-87/01570
- DE-B- 1 292 814
- GB-A- 2 008 394
- NL-A- 7 103 079

## Description

La présente invention concerne une machine à café permettant de produire du café liquide par percolation de café moulu comprimé par la machine.

On connaît un appareil à préparer du café en boisson à partir de capsules renfermant du café moulu, l'appareil permettant à de l'eau, en général sous pression, de transpercer ces capsules et de fournir ainsi un café en boisson. L'inconvénient d'un tel appareil est le faible choix dans la mouture, choix limité aux capsules pouvant être utilisées par l'appareil.

De ce fait il existe des machines à café permettant de délivrer du café en boisson à partir de café moulu en vrac, l'avantage étant le grand choix de mouture possible, notamment si l'utilisateur de la machine se fournit en café chez un torréfacteur. Une telle machine à café comprend un dispositif de distribution de café moulu, un dispositif de percolation et un bac de récupération de marc de café. Le document WO 07/01570 divulgue une telle machine.

L'inconvénient d'une telle machine est évidemment son encombrement, du fait de la présence notamment du dispositif de percolation qui comprend un dispositif de compression permettant de comprimer le café moulu en vrac, et, éventuellement du fait de la présence d'un réservoir à café intégré permettant d'alimenter le- dispositif de distribution de café moulu.

Ainsi, la présente invention vise à réaliser une machine à café à encombrement particulièrement réduit, principalement en largeur (la dimension horizontale de la face avant de la machine) et éventuellement en profondeur (la dimension horizontale perpendiculaire à la largeur), voire en hauteur.

Selon l'invention, pris en coupe selon un plan horizontal, le dispositif de fourniture de café moulu, le dispositif de percolation et le bac de récupération de la machine à café sont agencés dans trois zones de forme sensiblement rectangulaire et accolées les unes aux autres, une première zone à réservoir recevant le bac de récupération et un second réservoir, une seconde zone à percolation recevant le dispositif de percolation, et une troisième zone annexe recevant le dispositif de fourniture de café moulu.

La largeur d'une telle machine est particulièrement réduite. Ainsi, alors qu'une machine standard a une largeur au moins égale à 230 mm, celle conforme à la présente invention est d'environ 200 mm, voire d'environ 170 mm selon l'agencement plus précis des trois zones rectangulaires entre elles.

D'autres particularités et avantages de la présente invention apparaîtront dans la description de trois modes de réalisation donnés à titre d'exemple non limitatifs et illustrés dans les dessins mis en annexe dans lesquels :

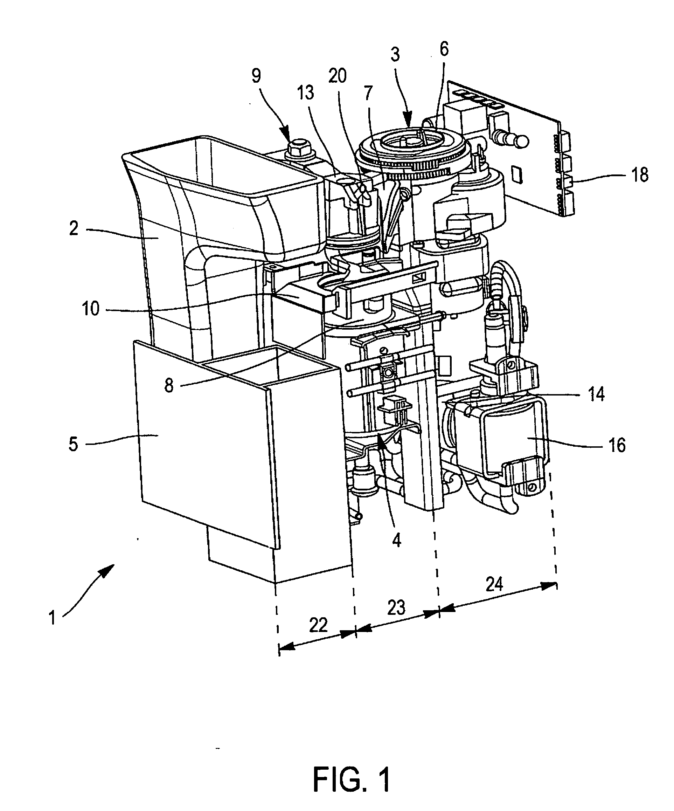

La figure 1 est une vue en perspective de côté d'une machine à café selon un premier mode de réalisation de la présente invention, sans ses éléments de carrosserie ;
La figure 2 est une vue similaire à la figure 1, certains éléments de carrosserie de la machine à café selon le premier mode de réalisation étant représentés ;

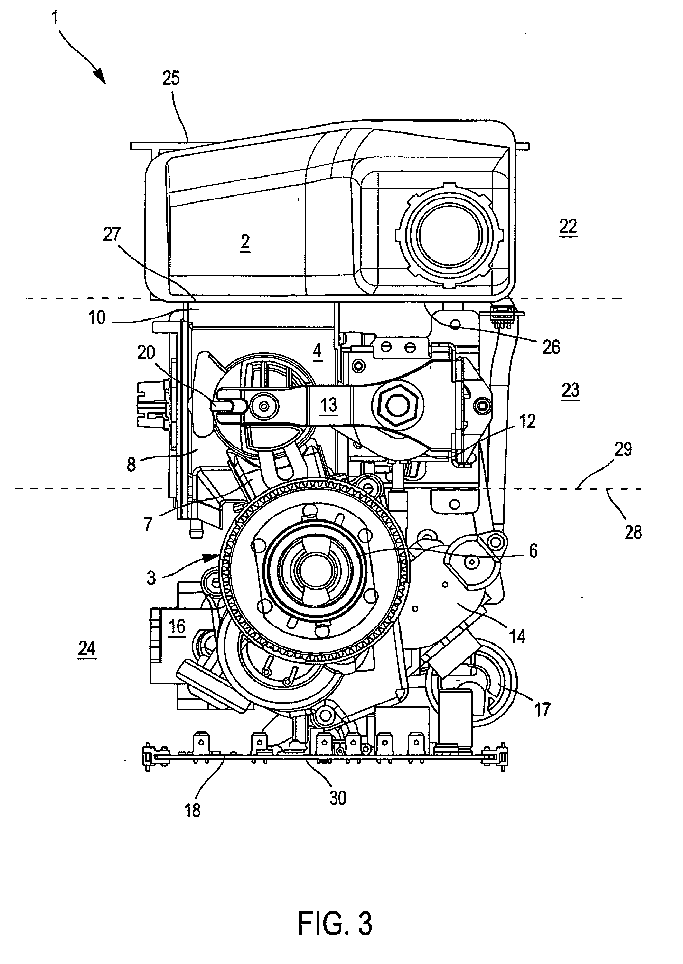

La figure 3 est une vue de dessus de la machine à café selon le premier mode de réalisation ;

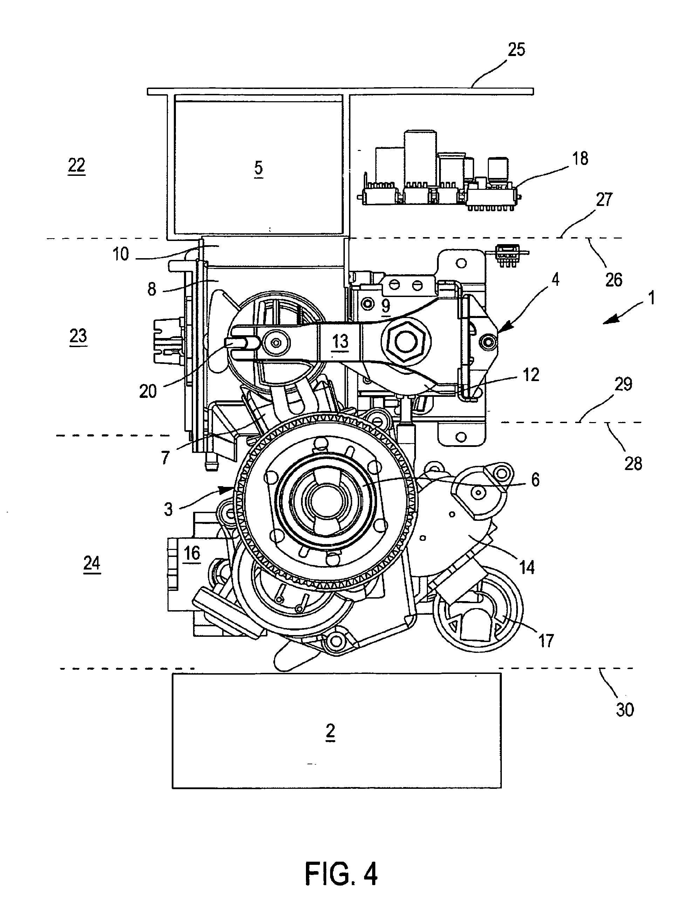

La figure 4 est une vue de dessus de la machine à café selon un second mode de réalisation, similaire à la figure 3 ; et

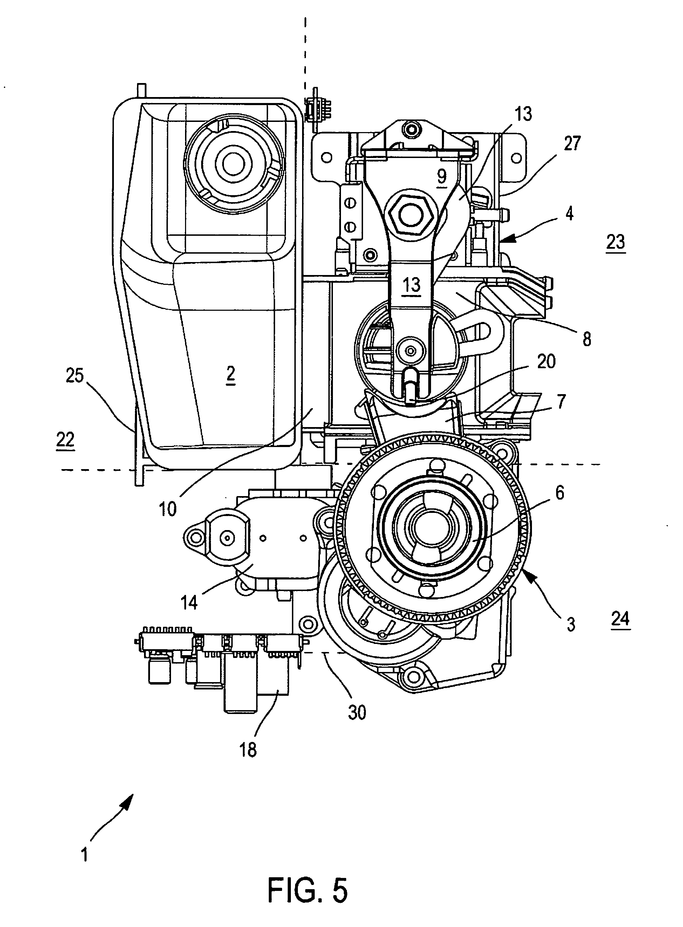

La figure 5 est une vue de dessus de la machine à café selon un troisième mode de réalisation, similaire aux figures 3 et 4.

Comme on peut le voir aux différents figures, une machine à café 1 comprend un réservoir d'eau 2, un dispositif de fourniture de café moulu 3, un dispositif de percolation 4 adapté à réaliser du café en boisson à partir du café moulu et un bac de récupération de marc de café 5.

Afin de faciliter son remplissage, le réservoir d'eau 2 est amovible. De plus, il est conformé de façon à pouvoir recevoir une cartouche de traitement d'eau.

De même, afin de faciliter sa vidange, le bac de récupération 5 est amovible.

Par ailleurs, dans les présents modes de réalisation, le dispositif de fourniture de café moulu 3 comprend un moulin à café 6 qui est adapté à broyer des grains de café et à délivrer des doses de café moulu vers le dispositif de percolation 4. Bien que non représenté, dans les trois modes de réalisation, le dispositif de fourniture de café moulu 3 comprend également un réservoir de café en grain qui, ici, est disposé au-dessus du moulin à café de sorte que le café en grain tombe directement dans le moulin 6. En outre, la machine à café 1 comprend une goulotte 7 qui est adaptée à transférer par gravité les doses de café moulu du moulin à café 6 au dispositif de percolation 4.

En outre, dans les présents modes de réalisation, le dispositif de percolation 4 comprend un élément chauffant adapté à chauffer l'eau provenant du réservoir d'eau 2, une chambre d'infusion 8 adaptée à recevoir le café moulu provenant du dispositif de fourniture de café moulu 3 et l'eau chaude provenant de l'élément chauffant et à produire le café en boisson, un dispositif de compression 9 adapté à comprimer le café moulu dans la chambre d'infusion 8, et un dispositif d'éjection adapté à éjecter le marc de café hors de la chambre d'infusion 8.

De façon plus précise, dans les présents modes de réalisation, la chambre d'infusion 8 est disposée au-dessus de l'élément chauffant. La chambre d'infusion 8 comprend une ouverture supérieure permettant l'introduction du café moulu et d'éjection du marc de café. Ici, la goulotte 7 s'étend de l'orifice de sortie du moulin à café 6 à l'ouverture supérieure de la chambre d'infusion 8.

De plus, le dispositif d'éjection comprend un piston éjecteur mobile entre une position d'infusion dans laquelle l'infusion du café se réalise, et une position d'éjection. Ici, le piston éjecteur est formé par la paroi de fond de la chambre d'infusion 8 (paroi faisant face à l'ouverture supérieure). En position d'éjection, le piston éjecteur est disposé au niveau de cette ouverture. De plus, le dispositif d'éjection comprend un doigt éjecteur mobile entre une position de repos et une position d'éjection. Quand le piston éjecteur est dans sa position d'éjection, le déplacement du doigt éjecteur de sa position de repos à sa position d'éjection permet de racler le piston éjecteur et d'entraîner le marc de café hors du dispositif de percolation 4. En l'occurrence, la machine à café 1 comprend un toboggan d'évacuation 10 qui est adapté à transférer par gravité le marc de café du dispositif de percolation 4 au bac de récupération 5 (plus précisément, le doigt éjecteur est adapté à entraîner le marc de café raclé jusqu'au toboggan 10).

En outre, le dispositif de compression 9 comprend un piston compresseur 11 qui est monté mobile entre une position d'introduction dans laquelle le café moulu peut être introduit dans la chambre d'infusion 8 et le marc de café peut en être éjecté, et une position de compression dans laquelle le café moulu y est comprimé. Ici, le piston compresseur 11 est disposé au-dessus et à distance de l'ouverture supérieure de la chambre d'infusion 8. Par ailleurs, le dispositif de compression 9 comprend également un vérin hydraulique 12 adapté à entraîner le mouvement du piston compresseur 11 de l'une à l'autre de ses positions et à comprimer le café moulu. Ici, le vérin hydraulique 12 est disposé à côté de la chambre d'infusion 8. En l'occurrence, le piston compresseur 11 est fixé de façon immobile à la tige du vérin hydraulique 12 par une barre de liaison 13. Ainsi, quand la tige est en position déployée, le piston compresseur 11 est en position d'introduction, et quand elle est en position escamotée dans le cylindre du vérin hydraulique 12, le piston compresseur 11 est en position de compression. En l'occurrence, le vérin hydraulique 12 est à simple effet dans le sens de la rétractation de la tige (et donc dans le sens de la compression du café moulu), la machine à café 1 comprenant un dispositif de rappel reliant le cylindre 13 à la tige de façon à permettre un retour de la tige en position déployée dès que la pression dans le cylindre passe sous une valeur limité.

Dans les présents modes de réalisation, le vérin hydraulique 12 est actionné par l'eau contenue dans le réservoir d'eau 2. A cet effet, la machine à café 1 comprend un distributeur d'eau 14 adapté à distribuer l'eau de façon sélective vers l'élément chauffant et le vérin hydraulique 12. De plus, la machine 1 comprend également un récipient de collecte 15 adapté à recevoir l'eau résiduelle contenue dans le circuit d'eau de l'élément chauffant.

Enfin, la machine à café 1 comprend également une pompe 16 adaptée à prélever l'eau du réservoir d'eau 2 et à délivrer de l'eau sous pression dans la chambre d'infusion 8 (ainsi qu'au vérin hydraulique 12) via le distributeur d'eau 14. Elle comprend aussi un débitmètre 17 permettant de gérer le volume d'eau introduit dans la chambre d'infusion 8, et une carte électronique 18 permettant de commander les différents organes de la machine à café.

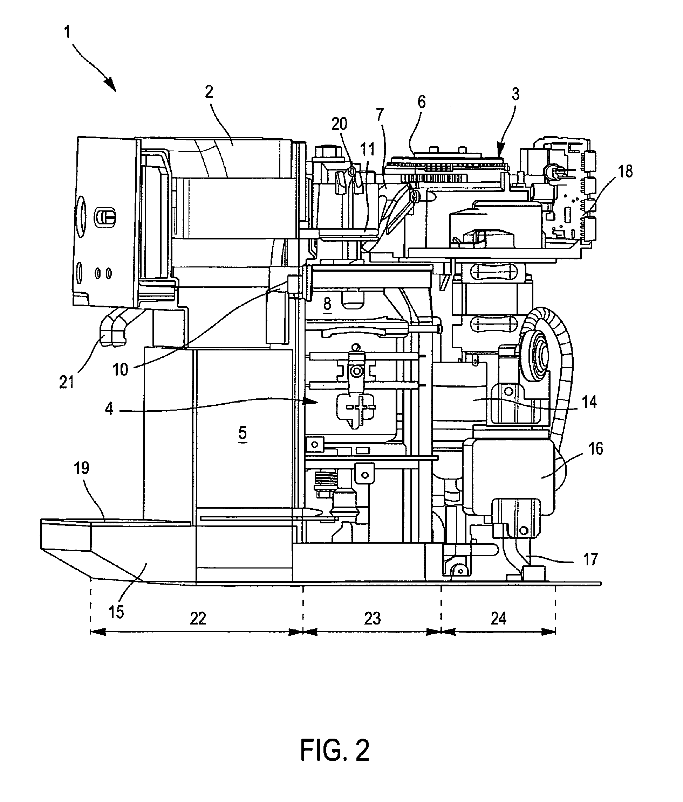

En utilisation, après mise en route de la machine à café 1 et après avoir déposé une tasse sur le support de tasse 19 (cf. figure 2) formé par la surface supérieure du récipient de collecte 15, le dispositif de fourniture de café moulu 3 fournit une dose de café moulu (typiquement entre 6 à 12g selon la recette choisie) au dispositif de percolation 4. De façon plus précise, le moulin à café 6 broie une dose de café en grain, le café moulu étant ensuite entraîné par gravité dans la chambre d'infusion 8 via la goulotte 7 (le piston compresseur 7 est dans sa position d'introduction, laissant l'ouverture supérieure libre). Ensuite, la pompe 16 fournit de l'eau sous pression (jusqu'à 15 bars, voire plus) au vérin hydraulique 12, via le distributeur d'eau 14 dont seule la voie connectée au vérin est ouverte. De ce fait, la tige se rétracte dans le cylindre 13 et le piston compresseur 11 descend dans la chambre d'infusion 8 et y comprime la mouture. Une fois la compression atteinte, le distributeur d'eau 14 est activé de sorte que sa voie connectée au vérin se ferme (maintenant ainsi la pression dans le cylindre 13) et que sa voie connectée à l'élément chauffant soit ouverte. De ce fait l'eau sous pression est chauffée et injectée dans la chambre d'infusion 8 (au niveau de sa paroi de fond), traverse la mouture de café et sort par une conduite d'évacuation 20.réalisée dans le piston compresseur 11 pour alimenter une buse à café 21 située au -dessus du support de tasse 19. Une fois la boisson réalisée, la pompe 16 est arrêtée, le distributeur d'eau 14 change à nouveau d'état en permettant la purge du circuit d'eau de l'élément chauffant vers le récipient de collecte 15. Après quelques secondes, le distributeur d'eau 14 change une nouvelle fois d'état et permet à l'eau contenue dans le vérin hydraulique 12 de retourner vers le réservoir d'eau 2. La remontée du piston compresseur 11 entraîne également, ici par un jeu de cames, la remontée du piston éjecteur jusqu'à sa position d'éjection, puis le déplacement du doigt éjecteur qui pousse le marc de café dans le bac de récupération 5 via le toboggan d'évacuation 10.

Selon l'invention, afin de minimiser l'encombrement de la machine 1, pris en coupe selon un plan horizontal, le réservoir d'eau 2, le dispositif de fourniture de café moulu 3, le dispositif de percolation 4 et le bac de récupération 5 sont agencés dans trois zones de forme sensiblement rectangulaire et accolées les unes aux autres, une première zone à réservoir 22 pour le bac de récupération 5 (ainsi que, dans les présents exemples, pour le récipient de collecte 15, et, dans les premier et troisième exemples, le réservoir d'eau 2), une seconde zone à percolation 23 pour le dispositif de percolation 4 (c'est-à-dire l'élément chauffant, la chambre d'infusion 8, le dispositif de compression 9 et le dispositif d'éjection), et une troisième zone annexe 24 pour le dispositif de fourniture de café moulu 3 (ainsi que, dans les présents exemples, pour le distributeur d'eau 14, la pompe 16, le débitmètre 17 et la carte électronique 18).

De préférence, afin de faciliter l'accès aux différents réservoirs, la zone à réservoir 22 débouche à la face avant de la machine 1, et la zone annexe 24, surtout quand elle comprend un moulin à café 6 qui est particulièrement bruyant, débouche à la face arrière.

Dans les deux premiers modes de réalisation, la zone à réservoir 22 occupe la totalité de la face avant de la machine 1. Cette zone à réservoir 22 est orientée de sorte qu'un premier 25 de ses deux côtés 25, 26 les plus longs s'étend le long de la face avant. Ensuite, la zone à percolation 23 est située derrière la zone à réservoir 22 et est orientée de sorte qu'un premier 27 de ses deux côtés 27, 28 les plus longs s'étend le long du deuxième 26 des deux côtés 25, 26 les plus longs de la zone à réservoir 22. Enfin la zone annexe 24 est située derrière la zone à percolation 23 et est orientée de sorte qu'un premier 29 de ses deux côtés 29, 30 les plus longs s'étend le long du deuxième 28 des deux côtés 27, 28 les plus longs de la zone à percolation 23. Ainsi, les trois zones rectangulaires 22, 23, 24 sont accolées les unes aux autres, selon la même orientation (leur longueur identique étant égale à la largeur de la machine 1).

Par ailleurs, dans le premier mode de réalisation préféré, le réservoir d'eau 2 est disposé dans la zone à réservoir 22, au-dessus du bac de récupération 5. Dans ce mode de réalisation, le deuxième 30 des deux cotés 29, 30 les plus longs de la zone annexe 24 s'étend le long de la face arrière de la machine 1. Ainsi, la somme des trois largeurs des trois zones est égale à la profondeur de la machine 1. Dans ce mode de réalisation, la largeur de la machine 1 est inférieure à 170 mm et sa profondeur inférieure à 310 mm.

Dans le second mode de réalisation, le réservoir d'eau 2, pour des raisons esthétiques, est disposé dans une quatrième zone qui lui est propre, à la suite de la zone annexe 24. Dans ce mode de réalisation, la largeur de la machine reste inférieure à 170 mm, mais sa profondeur est augmentée de 30 mm par rapport à celle du premier mode de réalisation.

Dans le troisième mode de réalisation, la zone à réservoir 22 et la zone à percolation 23 occupent chacune environ une moitié de la face avant de la machine 1. Ces deux zones 22, 23 sont orientées de sorte que, pour chaque zone 22, 23, un premier 25, 27 de leurs deux côtés les plus longs s'étend le long des deux faces latérales de la machine 1. La zone annexe 24 est située derrière la zone à réservoir 22 et la zone à percolation 23 et est orientée de sorte qu'un 30 de ses deux côtés les plus longs s'étend le long de la face arrière de la machine. Dans ce mode de réalisation, la profondeur de la machine reste inférieure à 310 mm, mais sa largeur est augmentée de 30 mm par rapport à celles des deux premiers modes de réalisation.

La présente invention n'est pas limitée à ces trois modes de réalisation.

Ainsi, le dispositif de fourniture de café moulu, au lieu de comprendre un moulin associé à un bac de café en grain, pourrait être formé par un bac de café moulu dont l'ouverture d'évacuation du café serait commandée par le système informatique de la machine de façon à délivrer des doses de café.

## Revendications

1. Machine à café (1) comprenant un support de tasse (19) sur lequel une tasse de réception de café en boisson peut être posée et présentant une direction verticale dans un état d'utilisation où la tasse est ainsi posée, la machine à café (1) comprenant:
- un dispositif de fourniture de café moulu (3),
- un dispositif de percolation (4) et,
- un bac de récupération de marc de café (5), **caractérisée en ce que**, selon un plan horizontal perpendiculaire à la direction verticale, le dispositif de fourniture de café moulu (3), le dispositif de percolation (4) et le bac de récupération (5) sont agencés dans trois zones (22, 23, 24) de forme sensiblement rectangulaire et accolées les unes aux autres, une première zone à réservoirs (22) pour le bac de récupération (5) et un second réservoir (15), une seconde zone à percolation (23) pour le dispositif de percolation (4), et une troisième zone annexe (24) pour le dispositif de fourniture de café moulu (3).

2. Machine à café (1) selon la revendication 1, **caractérisée en ce que** le second réservoir (15) est formé par un récipient de collecte des eaux usées (15) dont la surface supérieure forme le support de tasse (19).

3. Machine à café (1) selon l'une des revendications 1 ou 2, **caractérisée en ce qu'**un troisième réservoir (2) est disposé dans la zone à réservoirs (22).

4. Machine à café (1) selon la revendication 3, **caractérisée en ce que** le troisième réservoir (2) est formé par un réservoir à eau (2).

5. Machine à café selon l'une des revendications 1 à 4, **caractérisée en ce que** la zone annexe (24) débouche à la face arrière de la machine (1).

6. Machine à café (1) selon l'une des revendications 1 à 5, **caractérisée en ce que** la zone à réservoirs (22) débouche à la face avant de la machine (1).

7. Machine à café (1) selon la revendication 6, **caractérisé en ce que** la zone à réservoirs (22) et la zone à percolation (23) occupent chacune environ la moitié de la face avant de la machine (1), chacune de ces deux zones (22, 23) étant orientée de façon à être contigües l'une à l'autre et à avoir un (25, 27) de leurs deux côtés les plus longs s'étendant le long d'une face latérale de la machine (1).

8. Machine à café selon la revendication 7, **caractérisée en ce que** la zone annexe (24) est située derrière la zone à réservoirs (22) et la zone à percolation (23) et est orientée de sorte qu'un (30) de ses deux côtés les plus longs s'étend le long de la face arrière de la machine (1).

9. Machine à café (1) selon la revendication 6, **caractérisée en ce que** la totalité de la face avant de la machine (1) est occupée par la zone à réservoirs (22) orientée de sorte qu'un premier (25) de ses deux côtés (25, 26) les plus longs s'étend le long de la face avant de la machine.

10. Machine à café (1) selon la revendication 9, **caractérisée en ce que** la zone à percolation (25) est située derrière la zone à réservoirs (22) et est orientée de sorte qu'un premier (27) de ses deux côtés (27, 28) les plus longs s'étend le long du deuxième (26) des deux côtés les plus longs de la zone à réservoir (22).

11. Machine à café (1) selon la revendication 10, **caractérisée en ce que** la zone annexe (24) est située derrière la zone à percolation (23) et est orientée de sorte qu'un premier (29) de ses deux côtés (29, 30) les plus longs s'étend le long du deuxième (28) des deux côtés les plus longs de la zone à percolation (23).

12. Machine à café (1) selon la revendication 11, **caractérisée en ce que** le deuxième (30) des deux cotés les plus longs de la zone annexe (24) s'étend le long de la face arrière de la machine (1).

13. Machine à café (1) selon la revendication 11, **caractérisée en ce qu'**elle comprend un réservoir à eau (2) qui est accolé au deuxième (30) des deux cotés les plus longs de la zone annexe (24).

14. Machine à café (1) selon l'une des revendications 1 à 13, **caractérisée en ce qu'**elle comprend une pompe (16) qui est adaptée à délivrer de l'eau sous pression dans le dispositif de percolation (4) et qui est disposée dans la zone annexe (24).

15. Machine à café (1) selon l'une des revendications 1 à 14, **caractérisée en ce qu'**elle comprend un débitmètre (17) qui est adapté à gérer le volume d'eau introduit dans le dispositif de percolation (4) et qui est disposé dans la zone annexe (24).

16. Machine à café selon l'une des revendications 1 à 14, **caractérisée en ce qu'**elle comprend une carte électronique (18) qui permet de commander les différents organes de la machine à café (1) et qui est disposée dans la zone annexe (24).

17. Machine à café (1) selon l'une des revendications 1 à 16, **caractérisée en ce qu'**elle comprend un distributeur d'eau (14) qui est adapté à distribuer de l'eau de façon sélective vers un élément chauffant faisant partie du dispositif de percolation (4) et adapté à chauffer l'eau avant son introduction dans une chambre d'infusion (8) du dispositif de percolation (4), et vers un vérin hydraulique (12) faisant partie du dispositif de percolation (4) et adapté à comprimer le café moulu dans la chambre d'infusion (8), le distributeur d'eau (14) étant disposé dans la zone annexe (24).

## Claims

1. Coffee machine (1) including a cup holder (19) whereon a cup for receiving coffee as a beverage can be placed and having a vertical direction in a state of use where the cup is placed as such, the coffee machine (1) comprising:
- a ground coffee supply device (3),
- a percolation device (4) and,
- a coffee grounds collecting tray (5), **characterized in that**, along a horizontal plane perpendicular to the vertical direction, the ground coffee supply device (3), the percolation device (4) and the coffee grounds collecting tray (5) are arranged in three areas (22, 23, 24) of a substantially rectangular shape and joined to each other, a first tank area (22) for the coffee grounds collecting tray (5) and a second tank (15), a second percolation area (23) for the percolation device (4), and a third subsidiary area (24) for the ground coffee supply device (3).

2. Coffee machine (1) according to claim 1, **characterized in that** the second tank (15) is formed by a waste water collecting tank (15) of which the upper surface forms the cup holder (19).

3. Coffee machine (1) according to one of claims 1 or 2, **characterized in that** a third tank (2) is disposed in the tank area (22).

4. Coffee machine (1) according to claim 3, **characterized in that** the third tank (2) is formed by a water tank (2).

5. Coffee machine according to one of claims 1 to 4, **characterized in that** the subsidiary area (24) opens at the rear face of the machine (1).

6. Coffee machine (1) according to one of claims 1 to 5, **characterized in that** the tank area (22) opens at the front face of the machine (1).

7. Coffee machine (1) according to claim 6, **characterized in that** the tank area (22) and the percolation area (23) each occupy about half the front face of the machine (1), each of these two areas (22, 23) being directed in order to be contiguous to one another and to have one (25, 27) of their two longest sides extending along a side face of the machine (1).

8. Coffee machine according to claim 7, **characterized in that** the subsidiary area (24) is located behind the tank area (22) and the percolation area (23) and is directed so that one (30) of its two longest sides extends along the rear face of the machine (1).

9. Coffee machine (1) according to claim 6, **characterized in that** the entire front face of the machine (1) is occupied by the tank area (22) directed so that a first (25) of its two longest sides (25, 26) extends along the front face of the machine.

10. Coffee machine (1) according to claim 9, **characterized in that** the percolation area (25) is located behind the tank area (22) and is directed so that a first (27) of its two longest sides (27, 28) extends along the second (26) of the two longest sides of the tank area (22).

11. Coffee machine (1) according to claim 10, **characterized in that** the subsidiary area (24) is located behind the percolation area (23) and is directed so that a first (29) on its two longest sides (29, 30) extends along the second (28) of the two longest sides of the percolation area (23).

12. Coffee machine (1) according to claim 11, **characterized in that** the second (30) of the two longest sides of the subsidiary area (24) extends along the rear face of the machine (1).

13. Coffee machine (1) according to claim 11, **characterized in that** it comprises a water tank (2) joined to the second (30) of the two longest sides of the subsidiary area (24).

14. Coffee machine (1) according to one of claims 1 to 13, **characterized in that** it comprises a pump (16) which is adapted to deliver pressurized water in the percolation device (4) and which is disposed in the subsidiary area (24).

15. Coffee machine (1) according to one of claims 1 to 14, **characterized in that** it comprises a flowmeter (17) which is adapted to control the volume of water introduced into the percolation device (4) and which is disposed in the subsidiary area (24).

16. Coffee machine according to one of claims 1 to 14, **characterized in that** it comprises an electronic board (18) for controlling the various parts of the coffee machine (1) and which is disposed in the subsidiary area (24).

17. Coffee machine (1) according to one of claims 1 to 16, **characterized in that** it comprises a water delivery device (14) which is adapted to selectively deliver water to a heater as part of the percolation device (4) and adapted to heat water before introducing the same into an infusion room (8) of the percolation device (4), and towards a hydraulic jack (12) forming part of the percolation device (4) and adapted to compress the ground coffee in the infusion room (8), the water delivery device (14) being disposed in the subsidiary area (24).

## Patentansprüche

1. Kaffeemaschine (1) umfassend einen Tassenträger (19,) auf den die Tasse, die das Kaffeegetränk aufnimmt, gestellt werden kann und welche in einem Bedienungszustand eine vertikale Richtung aufweist, wo die Tasse so steht, wobei die Kaffeemaschine (1) Folgende umfasst:
- eine Vorrichtung zur Bereitstellung von gemahlenem Kaffee (3),
- eine Brühvorrichtung (4) und,
- einen Auffangbehälter für Kaffeesatz (5),
**dadurch gekennzeichnet, dass** in einer zur vertikalen Richtung rechtwinklig verlaufenden horizontalen Ebene die Bereitstellvorrichtung von gemahlenem Kaffee (3), die Brühvorrichtung (4) und der Auffangbehälter (5) in drei im wesentlichen rechteckigen und benachbarten Bereichen (22, 23, 24) angeordnet sind mit einem ersten Bereich mit Behältern (22) für den Auffangbehälter (5) und einen zweiten Behälter (15), einem zweiten Bereich zum Brühen (23) für die Brühvorrichtung (4) und einem dritten Zusatzbereich (24) für die Vorrichtung zur Bereitstellung von gemahlenem Kaffee (3).

2. Kaffeemaschine (1) nach Anspruch 1, **dadurch gekennzeichnet, dass** der zweite Behälter (15) aus einem Sammelbehälter für Abwasser (15) gebildet wird, dessen obere Oberfläche den Tassenträger (19) bildet.

3. Kaffeemaschine (1) nach Anspruch 1 oder 2, **dadurch gekennzeichnet, dass** ein dritter Behälter (3) in dem Behälterbereich (22) angeordnet ist.

4. Kaffeemaschine (1) nach Anspruch 3, **dadurch gekennzeichnet, dass** der dritte Behälter (3) von einem Wassertank (2) gebildet wird.

5. Kaffeemaschine (1) nach einem beliebigen der Ansprüche 1 bis 4, **dadurch gekennzeichnet, dass** der Zusatzbereich (24) in die Rückseite der Maschine (1) mündet.

6. Kaffeemaschine (1) nach einem beliebigen der Ansprüche 1 bis 5, **dadurch gekennzeichnet, dass** der Behälterbereich (22) in die Vorderseite der Maschine (1) mündet.

7. Kaffeemaschine (1) nach Anspruch 6, **dadurch gekennzeichnet, dass** der Behälterbereich (22) und der Brühbereich (23) jeweils ungefähr die Hälfte der Vorderseite der Maschine (1) belegen, wobei jeder dieser beiden Bereiche (22, 23) so ausgerichtet ist, dass sie benachbart sind und eine (25, 27) ihrer beiden längsten Seiten sich entlang der Seitenflächen der Maschine (1) erstreckt.

8. Kaffeemaschine nach Anspruch 7, **dadurch gekennzeichnet, dass** der Zusatzbereich (24) sich hinter dem Behälterbereich (22) und dem Brühbereich (23) befindet, und so ausgerichtet ist, dass eine erste (30) seiner beiden längsten Seiten sich entlang der Rückseite der Maschine (1) erstreckt.

9. Kaffeemaschine (1) nach Anspruch 6, **dadurch gekennzeichnet, dass** die gesamte Vorderseite der Maschine (1) von dem Behälterbereich (22) belegt wird, der so ausgerichtet ist, dass eine erste (25) seiner beiden längsten Seiten (25, 26) sich entlang der Vorderseiten der Maschine erstreckt.

10. Kaffeemaschine (1) nach Anspruch 9, **dadurch gekennzeichnet, dass** der Brühbereich (23) so ausgerichtet ist, dass eine erste (27) seiner beiden längsten Seiten (27, 28) sich entlang der beiden längsten Seiten des Behälterbereichs (22) erstreckt.

11. Kaffeemaschine (1) nach Anspruch 10, **dadurch gekennzeichnet, dass** der Zusatzbereich (24) sich hinter dem Brühbereich (23) befindet und so ausgerichtet ist, dass eine erste (29) seiner beiden längsten Seiten (29, 30) sich entlang der zweiten (28) der beiden längsten Seiten des Brühbereichs (23) erstreckt.

12. Kaffeemaschine (1) nach Anspruch 11, **dadurch gekennzeichnet, dass** die zweite (30) der beiden längsten Seiten des Zusatzbereichs (24) sich entlang der Rückseite der Maschine (1) erstreckt.

13. Kaffeemaschine (1) nach Anspruch 11, **dadurch gekennzeichnet, dass** sie einen Wassertank (2) umfasst, der an die zweite (30) der beiden längsten Seiten des Zusatzbereichs (24) angrenzt.

14. Kaffeemaschine (1) nach einem beliebigen der Ansprüche 1 bis 13, **dadurch gekennzeichnet, dass** sie eine Pumpe (16) umfasst, die dazu ausgelegt ist, der Brühvorrichtung (4) Wasser unter Druck zu liefern, und die in dem Zusatzbereich (24) angeordnet ist.

15. Kaffeemaschine (1) nach einem beliebigen der Ansprüche 1 bis 14, **dadurch gekennzeichnet, dass** sie einen Durchflussmesser (17) umfasst, der dafür ausgelegt ist, das in die Brühvorrichtung (4) eingebrachte Wasservolumen zu regeln und der in dem Zusatzbereich (24) angeordnet ist.

16. Kaffeemaschine (1) nach einem beliebigen der Ansprüche 1 bis 14, **dadurch gekennzeichnet, dass** sie eine elektronische Karte (18) umfasst, die es ermöglicht, die verschiedenen Organe der Kaffeemaschine (1) zu steuern und die im Zusatzbereich (24) angeordnet ist.

17. Kaffeemaschine (1) nach einem beliebigen der Ansprüche 1 bis 16, **dadurch gekennzeichnet, dass** sie einen Wasserverteiler (14) umfasst, der dafür ausgelegt ist, Wasser selektiv einem Heizelement, das zu der Brühvorrichtung (4) gehört, und dazu ausgerichtet ist, das Wasser vor seinem Einlass in die Brühkammer (8) der Brühvorrichtung (4) zu erwärmen, und einem Hydraulikkolben (12) zur Verfügung zu stellen, der zu der Brühvorrichtung (4) gehört, und dazu ausgerichtet ist, den gemahlenen Kaffee in der Brühkammer (8) zu komprimieren, wobei der Wasserverteiler (14) in dem Zusatzbereich (24) angeordnet ist.
